# EUROPEAN PATENT APPLICATION

(11) **EP 4 219 161 A1**
(43) Date of publication of application: **02.08.2023**
(21) Application number: 21871655.3
(22) Date of filing: 27.09.2021
(51) Int. Cl.: B32B 27/32, B32B 27/08, B32B 27/34, B32B 27/02, B32B 27/30, B32B 27/36, B32B 27/04, B32B 5/02, B32B 5/12, B32B 5/26, B32B 7/08, B32B 7/022, B32B 33/00, B32B 37/10, B32B 37/06, D06M 17/04, D06M 17/10, F41H 1/02, F41H 1/04, F41H 5/02

(54) **ARAMID NANOFIBER COMPOSITE UNIDIRECTIONAL FABRIC AND PREPARATION METHOD THEREFOR**

(30) Priority: 28.09.2020 CN 202011041333
(71) Applicant: Sinochem High Performance Fiber Materials Co., Ltd, Yangzhou, Jiangsu 211999 (CN); Jiangsu Ruisheng Advanced Material Technology Co., Ltd, Yangzhou, Jiangsu 211999 (CN)
(72) Inventor: CAO, Yutong, Yangzhou Chemical Industry Park Yizheng, Jiangsu 211999 (CN); ZHANG, Liming, Yangzhou Chemical Industry Park Yizheng, Jiangsu 211999 (CN); SONG, Shubin, Yangzhou Chemical Industry Park Yizheng, Jiangsu 211999 (CN); ZHAO, Kairong, Yangzhou Chemical Industry Park Yizheng, Jiangsu 211999 (CN); ZHANG, Hao, Yangzhou Chemical Industry Park Yizheng, Jiangsu 211999 (CN); CAO, Meirong, Yangzhou Chemical Industry Park Yizheng, Jiangsu 211999 (CN); CHEN, Chao, Yangzhou Chemical Industry Park Yizheng, Jiangsu 211999 (CN); QIAN, Zhonghao, Yangzhou Chemical Industry Park Yizheng, Jiangsu 211999 (CN)
(74) Representative: V.O.
(86) International application number: PCT/CN2021/120841
(87) International publication number: WO 2022/063286

(57) **Abstract**

The invention relates to an aramid nanofiber composite unidirectional fabric and a preparation method therefor. The aramid nanofiber composite unidirectional fabric comprises unidirectional sheet layers, wherein the unidirectional sheet layers comprise aramid fibers arranged in a unidirectional mode and an adhesive; and the adhesive comprises aramid nanofibers. According to the aramid nanofiber composite unidirectional fabric, the bonding strength of the adhesive is improved, and the interface performance of the aramid fibers and the adhesive is improved. A bulletproof product prepared by cutting, laminating, compounding and molding the aramid nanofiber composite UD fabric has the advantages that the shrapnel impact resistance is improved despite the weight of the product not being greatly increased, and the safety index is higher.

## Description

### Technical Field

The present disclosure belongs to the technical field of bulletproof protection, and in particular relates to an aramid nanofiber composite unidirectional fabric and a method for preparing the same.

### Background Art

Aramid fiber is a high-performance organic fiber having excellent comprehensive properties. It has high-strength and high-modulus mechanical properties, as well as high temperature resistance, flame retardance and chemical corrosion resistance. It is widely used in the field of military protection.

UD fabric (unidirectional fabric, also known as unidirectional cloth or unidirectional textile) is a unidirectional non-weft fabric. It is usually formed by hot pressing 0°-arranged unidirectional fibers and 90°-arranged unidirectional fibers which are compounded orthogonally and coated with a resin. It's an ideal force-bearing member. As required by a force-bearing structure, fibers with higher strength are usually selected, such as high-strength aramid fiber, ultra-high molecular weight polyethylene fiber, high-strength glass fiber, etc. Compared with woven fabric, UD fabric has many outstanding advantages such as lower density, high impact strength, good flexibility, good cutting resistance, absorption of bullets and shrapnel, and prevention of secondary damage caused by ricochet. Hence, it has wide application prospects.

There are mainly three ways to improve the bulletproof performance V50 of UD fabric at home and abroad. The first one is to increase the strength of aramid fiber. Ultra-high strength aramid fiber (at least 28g/d) is usually produced by polymerization with incorporation of a third monomer and spinning. The production is rather difficult, and the cost is 2-3 times that of ordinary strength aramid fiber (23g/d). So, the economy is poor. The second one is to employ an advanced UD processing technology. However, the cost of high-precision equipment is also 10 times that of ordinary equipment. The third one is to compound aramid fiber with a third component, such as aluminum oxide, graphene and other inorganic materials. However, the product is hard and uncomfortable.

### Summary

In order to improve the ballistic impact resistance of bulletproof articles, the present disclosure provides an aramid nanofiber composite UD fabric and a method for preparing the same. In the present disclosure, the aramid nanofiber is used as an additive in an adhesive to strengthen the resin system and activate the two-phase interface, so as to increase the safety index against bullets without notably increasing the mass of the product.

Specifically, the present disclosure provides an aramid nanofiber composite unidirectional fabric, wherein the aramid nanofiber composite unidirectional fabric comprises a unidirectional sheet layer, wherein the unidirectional sheet layer comprises unidirectionally arranged aramid fibers and an adhesive, wherein the adhesive comprises aramid nanofibers.

In one or more embodiments, the aramid fiber is 75-85% by mass of the aramid nanofiber composite unidirectional fabric.

In one or more embodiments, the adhesive is 15-25% by mass of the aramid nanofiber composite unidirectional fabric.

In one or more embodiments, the aramid nanofiber is 5-50% by mass of the adhesive.

In one or more embodiments, the aramid nanofiber is 18-36% by mass of the adhesive.

In one or more embodiments, the aramid nanofiber has a diameter of 5-200 nm, preferably 10-100 nm, more preferably 20-50 nm.

In one or more embodiments, the aramid nanofiber has a length of 5-100 µm, preferably 5-50 µm, more preferably 10-30 µm.

In one or more embodiments, the aramid fiber has a fineness of 500-2000 D, preferably 800-1000D.

In one or more embodiments, the aramid fiber has a tensile strength of greater than or equal to 23 g/d, an initial modulus of greater than or equal to 90 GPa, and an elongation at break of greater than or equal to 3%.

In one or more embodiments, the aramid fiber is para-aramid fiber and/or heterocyclic aramid fiber, preferably para-aramid fiber.

In one or more embodiments, the aramid nanofiber is para-aramid nanofiber and/or heterocyclic aramid nanofiber, preferably para-aramid nanofiber.

In one or more embodiments, the aramid nanofiber composite unidirectional fabric comprises at least two unidirectional sheet layers, wherein the aramid fibers in two adjacent unidirectional sheet layers are preferably arranged to form an included angle of 90±10°, wherein the aramid nanofiber composite unidirectional fabric preferably comprises 35-65 unidirectional sheet layers.

In one or more embodiments, the adhesive comprises a resin matrix, an emulsifier, aramid nanofibers, and optionally one or more selected from a tackifier, a defoamer, an antioxidant, and a pH regulator.

In one or more embodiments, the resin matrix is a styrene block copolymer, a polyurethane, a polyacrylate or a combination thereof, preferably a styrene block copolymer, more preferably a styrene-isoprene-styrene block copolymer.

In one or more embodiments, the resin matrix in the adhesive is 20-70%, preferably 30-70%, more preferably 40-60% by mass of the adhesive.

In one or more embodiments, the emulsifier is one or more selected from alcohol ether emulsifiers, phenol ether emulsifiers, ester ether emulsifiers, fatty acid ester emulsifiers and polyethylene glycol fatty acid ester emulsifiers.

In one or more embodiments, a mass ratio of the resin matrix to the emulsifier in the adhesive is 1:(0.1-0.6), preferably 1:(0.2-0.3), more preferably 1: (0.25-0.3). In one or more embodiments, the aramid nanofiber in the adhesive is 10-40%, preferably 10-36%, more preferably 18-36% by mass of the adhesive.

In one or more embodiments, the tackifier is selected from petroleum hydrocarbon resins and natural resins, wherein the tackifier preferably comprises a petroleum hydrocarbon resin and a natural resin, wherein a mass ratio of the petroleum hydrocarbon resin to the natural resin in the tackifier is preferably from 2:1 to 1:2.

In one or more embodiments, the tackifier, when present in the adhesive, is 5-20% by mass of the adhesive.

In one or more embodiments, a total mass fraction of the defoamer, antioxidant and pH regulator, when present in the adhesive, is no more than 5% of the adhesive.

In one or more embodiments, the aramid nanofiber composite unidirectional fabric further comprises a protective layer, wherein the protective layer is a polymer film; wherein the polymer film preferably has a thickness of 2-30 µm; wherein the polymer film is preferably selected from a polyethylene film, a polyamide film, a polyacrylate film and a polycarbonate film.

The present disclosure further provides a method for preparing an aramid nanofiber composite unidirectional fabric, comprising:
(1) preparing a unidirectional sheet layer comprising unidirectionally arranged aramid fibers and an adhesive, wherein the adhesive comprises aramid nanofibers;
   optionally further comprising:
(2) laminating unidirectional sheet layers, and then optionally attaching a protective layer to each of upper and lower surfaces of the laminated unidirectional sheet layers;
(3) compounding the laminated unidirectional sheet layers by hot-pressing to obtain a unidirectional fabric comprising a plurality of unidirectional sheet layers.

The present disclosure further provides a method for preparing the aramid nanofiber composite unidirectional fabric according to any embodiment in the present disclosure, comprising:
(1) preparing a unidirectional sheet layer comprising unidirectionally arranged aramid fibers and an adhesive, wherein the adhesive comprises aramid nanofibers;
   optionally further comprising:
(2) laminating unidirectional sheet layers, and then optionally attaching a protective layer to each of upper and lower surfaces of the laminated unidirectional sheet layers;
(3) compounding the laminated unidirectional sheet layers by hot-pressing to obtain a unidirectional fabric comprising a plurality of unidirectional sheet layers.

In one or more embodiments, in step (1), an aqueous dispersion of the adhesive is adhered to the unidirectionally arranged aramid fibers and dried to obtain the unidirectional sheet layer, wherein the aqueous dispersion of the adhesive comprises aramid nanofibers; wherein the aramid nanofiber in the aqueous dispersion of the adhesive is preferably 4.8%-20% by mass of the aqueous dispersion of the adhesive; wherein a mass ratio of water to solid components excluding the aramid nanofiber in the aqueous dispersion of the adhesive is preferably 7:3 to 4:6, preferably 6:4 to 5:5; wherein the thickness of the aqueous dispersion of the adhesive adhered to the unidirectionally arranged aramid fibers is preferably 0.01-0.1 mm.

In one or more embodiments, in step (2), 35-65 layers are laminated.

In one or more embodiments, in step (2), during lamination, the aramid fibers in two adjacent unidirectional sheet layers are arranged to form an included angle of 90±10°.

In one or more embodiments, in step (3), a hot pressing temperature is 150-250° C, and a hot pressing pressure is 10-30 MPa.

The present disclosure further provides an aramid nanofiber composite unidirectional fabric prepared by the method described in any embodiment herein; preferably, the aramid nanofiber composite unidirectional fabric is the aramid nanofiber composite unidirectional fabric as described in any embodiment herein.

The present disclosure further provides an aqueous dispersion of an adhesive, wherein the aqueous dispersion of the adhesive comprises a resin matrix, an emulsifier, aramid nanofibers, water, and optionally one or more selected from a tackifier, a defoamer, an antioxidant and a pH regulator.

In one or more embodiments, the aramid nanofiber in the aqueous dispersion of the adhesive is 4.8%-20% by mass of the aqueous dispersion of the adhesive.

In one or more embodiments, a mass ratio of water to the solid components excluding the aramid nanofiber in the aqueous dispersion of the adhesive is from 7:3 to 4:6, preferably from 6:4 to 5: 5.

In one or more embodiments, the resin matrix is a styrene block copolymer, a polyurethane, a polyacrylate or a combination thereof, preferably a styrene block copolymer, more preferably a styrene-isoprene-styrene block copolymer.

In one or more embodiments, the resin matrix in the aqueous dispersion of the adhesive is 20-70%, preferably 30-70%, more preferably 40-60% by mass of the solid components in the aqueous dispersion of the adhesive.

In one or more embodiments, the emulsifier is one or more selected from alcohol ether emulsifiers, phenol ether emulsifiers, ester ether emulsifiers, fatty acid ester emulsifiers and polyethylene glycol fatty acid ester emulsifiers.

In one or more embodiments, a mass ratio of the resin matrix to the emulsifier in the aqueous dispersion of the adhesive is 1:(0.1-0.6), preferably 1:(0.2-0.3), more preferably 1:(0.25-0.3).

In one or more embodiments, the aramid nanofiber is para-aramid nanofiber and/or heterocyclic aramid nanofiber.

In one or more embodiments, the aramid nanofiber has a diameter of 5-200 nm, preferably 10-100 nm, more preferably 20-50 nm.

In one or more embodiments, the aramid nanofiber has a length of 5-100 µm, preferably 5-50 µm, more preferably 10-30 µm.

In one or more embodiments, the aramid nanofiber in the aqueous dispersion of the adhesive is 5-50%, preferably 10-40%, more preferably 10-36%, more preferably 18-36% by mass of the solid components in the aqueous dispersion of the adhesive.

In one or more embodiments, the tackifier is selected from petroleum hydrocarbon resins and natural resins, wherein the tackifier preferably comprises a petroleum hydrocarbon resin and a natural resin, wherein a mass ratio of the petroleum hydrocarbon resin to the natural resin is preferably from 2:1 to 1:2.

In one or more embodiments, the tackifier, when present in the aqueous dispersion of the adhesive, is 5-20% by mass of the solid components in the aqueous dispersion of the adhesive.

In one or more embodiments, a total mass fraction of the defoamer, antioxidant and pH regulator, when present in the aqueous dispersion of the adhesive, is no more than 5% of the solid components in the aqueous dispersion of the adhesive.

The present disclosure further provides use of the aqueous dispersion of the adhesive described in any embodiment of the present disclosure for preparing a unidirectional fabric or improving ballistic resistance of a unidirectional fabric.

The present disclosure further provides a method for preparing a unidirectional fabric or improving ballistic resistance of a unidirectional fabric, wherein the method comprises using the aqueous dispersion of the adhesive described in any embodiment of the present disclosure to prepare the unidirectional fabric; wherein the unidirectional fabric is preferably the aramid nanofiber composite unidirectional fabric described in any embodiment herein; wherein the method is preferably as described in connection to the method for preparing the aramid nanofiber composite unidirectional fabric described in any embodiment herein.

The present disclosure further provides a bulletproof article prepared from the aramid nanofiber composite unidirectional fabric according to any embodiment of the present disclosure; wherein the bulletproof article includes a bulletproof vest, a bulletproof insert and a bulletproof helmet.

The present disclosure further provides a bulletproof article, wherein the bulletproof article comprises the aramid nanofiber composite unidirectional fabric according to any embodiment of the present disclosure; wherein the bulletproof article preferably includes a bulletproof vest, a bulletproof insert and a bulletproof helmet.

### Description of the Drawing

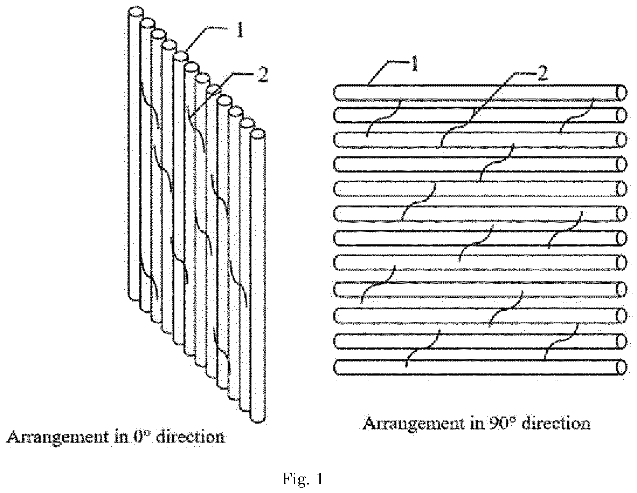

Fig. 1 is a schematic view showing the structure of the aramid nanofiber composite UD fabric according to the present disclosure, wherein the left drawing shows a unidirectional sheet layer of aramid fibers arranged in a 0° direction, and the right drawing shows a unidirectional sheet layer of aramid fibers arranged in a 90° direction.

### Detailed Description

In order to enable those skilled in the art to understand the features and effects of the present disclosure, the following general description and definitions are given to the terms and phrases mentioned in the specification and claims. Unless otherwise specified, all technical and scientific terms used herein have the general meanings of the present disclosure understood by those skilled in the art. In case of conflict, the definitions in this specification shall prevail.

The theories or mechanisms described and disclosed herein, no matter right or wrong, should not limit the scope of the present disclosure in any way, that is, the content of the present disclosure can be implemented without being restricted by any specific theory or mechanism.

In the present disclosure, all features defined in the form of a numerical range or a percentage range such as numerical values, quantities, contents and concentrations are only intended for brevity and convenience. Accordingly, the description of a numerical range or a percentage range shall be deemed to have covered and specifically disclosed all possible sub-ranges and individual values (including integers and fractions) within the range.

In the present disclosure, unless otherwise specified, percentages refer to mass percentages, and ratios refer to mass ratios.

In the present disclosure, unless otherwise specified, "comprising", "including", "containing" or similar expressions cover the meanings of "consisting of' and "substantially consisting of".

In the present disclosure, in order to make the description concise, not all possible combinations of various technical features in each embodiment or example are described. Therefore, as long as no contradiction will occur when these technical features are combined, the various technical features in the various embodiments or examples can be combined arbitrarily, and all possible combinations should be considered within the scope of this specification.

The aramid nanofiber composite UD fabric of the present disclosure (hereinafter referred to as the UD fabric of the present disclosure) comprises a unidirectional sheet layer, wherein the unidirectional sheet layer comprises aramid fibers and an adhesive, or consists of aramid fibers and an adhesive, wherein the adhesive comprises aramid nanofibers.

In the UD fabric of the present disclosure, the aramid nanofiber is generally 5-50% by mass of the adhesive. The aramid fiber is generally 70-90%, preferably 75-85%, for example, 78-82%, 80% by mass of the UD fabric. The adhesive comprising aramid nanofibers is generally 10-30%, preferably 15-25%, for example 18-22%, 20% by mass of the UD fabric.

As can be appreciated by those skilled in the art, the UD fabric is a laminated composite material reinforced by continuous fibers, comprising a unidirectional sheet layer prepared from a prepreg composed of fiber filaments arranged in parallel and an adhesive (the primary component of which is a resin matrix). The UD fabric also comprise a composite fabric or a composite board (also known as a multidirectional sheet) formed by laminating unidirectional sheet layers with the fibers arranged differently according to a design for laminating the unidirectional sheet layers, and finally hot pressing. In an individual unidirectional sheet layer of the UD fabric, the fiber filaments are arranged in a single direction. In the present disclosure, unless otherwise specified, an aramid fiber refers to an aramid filament.

The UD fabric of the present disclosure may be a UD fabric containing only one unidirectional sheet layer (also known as monolayer UD fabric, i.e. the unidirectional sheet layer itself), or a UD fabric containing multiple unidirectional sheet layers (also known as multilayer UD fabric).

In some embodiments, the UD fabric of the present disclosure comprises at least two unidirectional sheet layers. When the UD fabric of the present disclosure comprises at least two unidirectional sheet layers, the directions in which the aramid fibers in two adjacent unidirectional sheet layers are arranged preferably to form an included angle, wherein the included angle may be, for example, 30°-150°. In a preferred embodiment, the included angle between the directions in which the aramid fibers in two adjacent unidirectional sheet layers are arranged is 90±10°, for example, 90±5°, 90°. Fig. 1 shows a unidirectional sheet layer with the aramid fibers therein arranged in a 0° direction (left drawing) and a unidirectional sheet layer with the aramid fibers therein arranged in a 90° direction (right drawing). When two adjacent unidirectional sheet layers are arranged and laminated in the directions shown in the left and right drawings in Fig. 1 respectively, the included angle between the directions in which the aramid fibers in the two adjacent unidirectional sheet layers are arranged is 90°. In the present disclosure, the UD fabric with an included angle of 90° between the directions in which the aramid fibers in two adjacent unidirectional sheet layers are arranged is called a cross-laminated 0°/90° UD fabric. In a preferred embodiment, the UD fabric of the present disclosure comprises 35-65 unidirectional sheet layers, for example, 40, 50, 60 layers. When the UD fabric of the present disclosure comprises multiple unidirectional sheet layers, each unidirectional sheet layer may be the same or different. For example, the aramid fibers contained in each unidirectional sheet layer may be the same or different.

When the nanofiber composite UD fabric of the present disclosure comprises two unidirectional sheet layers, the areal density is 100-350 g/m², preferably 200-300 g/m², more preferably 200-250 g/m².

In the present disclosure, the aramid fiber refers to a fiber made of a polyamide in which at least 85% of the amide groups (-CONH-) in the molecular chain are directly linked to two benzene rings. The aramid fiber may be a polyamide fiber obtained by polymerizing monomers comprising one or more aromatic diamines and one or more aromatic diacids, preferably a polyamide fiber obtained by polymerizing one or more aromatic diamines and one or more aromatic diacids, for example, including but not limited to poly-p-phenylene terephthalamide fiber (i.e. para-aramid fiber), poly-m-phenylene isophthalamide fiber (meta-aramid fiber), heterocyclic aramid fiber and copolymeric aramid fiber.

The aramid nanofiber is prepared by deep processing of an aramid filament, also known as aramid in-situ nanofiber. The aramid in-situ nanofiber is obtained by disintegrating large fiber molecules into small molecules under the action of a strong shear force in the presence of a strong alkali or a certain amount of a surfactant. The aramid in-situ nanofiber has excellent small size effect and surface effect. The aramid in-situ nanofiber has high strength, stiffness, and specific surface area.

The diameter of the aramid nanofiber suitable for the present disclosure is 5-200 nm, preferably 10-100 nm, more preferably 20-50 nm. The length of the aramid nanofiber suitable for the present disclosure is 5-100 µm, preferably 5-50 µm, more preferably 10-30 µm. An aramid nanofiber having a diameter and a length within the above ranges is beneficial to improve the ballistic resistance of the UD fabric.

It's discovered in the present disclosure that the aramid nanofiber and the aramid fiber filament used to form the basic structure of the aramid UD fabric are both aromatic polyamides and have similar chemical structures. The aramid nanofiber has a higher specific surface area, and can be stably dispersed in an aqueous adhesive system. Hence, it can be used as a reinforcing agent for the adhesive. In addition, due to the hydrogen bonding effect of the aramid nanofiber, it can act as an interface agent to improve the performances of the two-phase interface between the aramid fiber and the adhesive, so that the aramid nanofiber composite UD fabric of the present disclosure exhibits excellent ballistic resistance.

The aramid fiber suitable for the present disclosure may be an aramid fiber commonly used in the art to prepare an aramid UD fabric, and its fineness is generally 600-1500 D, preferably 800-1000 D, for example, 800 D, 840 D, 1000 D. The aramid fiber suitable for the present disclosure has a tensile strength of preferably greater than or equal to 23 g/d, more preferably greater than or equal to 25 g/d, for example, greater than or equal to 26 g/d, an initial modulus of preferably greater than or equal to 90 GPa, and an elongation at break of preferably greater than or equal to 3%. In the present disclosure, unless otherwise specified, the tensile strength, initial modulus and elongation at break of a fiber refer to the tensile strength, initial modulus and elongation at break measured according to the ASTM D885 standard.

The aramid fiber suitable for the present disclosure is preferably para-aramid fiber (Aramid II) or heterocyclic aramid fiber (Aramid III), more preferably para-aramid fiber. The aramid nanofiber suitable for the present disclosure may be para-aramid nanofiber or heterocyclic aramid nanofiber, preferably para-aramid nanofiber. In the present disclosure, the aramid fiber and the aramid nanofiber preferably have the same chemical structure, for example, a fiber filament and a nanofiber of the same aromatic polyamide. An aramid fiber and an aramid nanofiber having the same chemical structure provide better interface compatibility, which is beneficial to improve the ballistic resistance (such as the V50 value and protection level under the international ballistic resistance standard NIJ0101.06). In a preferred embodiment, in the UD fabric of the present disclosure, the aramid fiber is para-aramid fiber, and the aramid nanofiber is para-aramid nanofiber. In a preferred embodiment, the aramid nanofiber in the UD fabric of the present disclosure is made from the same aramid fiber as the aramid fiber in the UD fabric.

As can be appreciated by those skilled in the art, the adhesive in the UD fabric of the present disclosure is the solid components in the aqueous dispersion of the adhesive used in the preparation of the UD fabric. In the preparation of the UD fabric, the solvent in the aqueous dispersion of the adhesive adhered to the fiber filament is removed, while the solid components in the aqueous dispersion of the adhesive remain in the UD fabric. The adhesive in the UD fabric generally comprises a resin matrix and an emulsifier. In the adhesive of the UD fabric of the present disclosure, the resin matrix is generally 20-70% by mass of the adhesive. In the adhesive of the UD fabric of the present disclosure, the emulsifier is generally 5-30% by mass of the adhesive.

The resin matrix suitable for the present disclosure may be a styrene block copolymer, a polyurethane, a polyacrylate or a combination thereof, preferably a styrene block copolymer. The styrene block copolymer suitable for the present disclosure is a polymer obtained by copolymerization of styrene with other olefin monomers (such as aliphatic olefin monomers), for example, a polymer obtained by copolymerization of styrene with one or more olefin monomers selected from butadiene, isoprene, ethylene, butene and propylene. The styrene block copolymer suitable for the present disclosure is preferably one or more selected from styrenebutadiene-styrene (SBS), styrene-isoprene-styrene (SIS), styrene-ethylene/butylene-styrene (SEBS) and styrene-ethylene/propylene-styrene (SEPS). In some embodiments, the resin matrix is SIS. In a preferred embodiment, the resin matrix in the adhesive of the UD fabric of the present disclosure is 30-70%, for example, 40-60%, 40-56%, 43%, 47%, 51% by mass of the adhesive.

The emulsifier suitable for the present disclosure may be one or more selected from alcohol ether emulsifiers, phenol ether emulsifiers, ester ether emulsifiers, fatty acid ester emulsifiers and polyethylene glycol fatty acid ester emulsifiers. The emulsifier is used to emulsify the resin matrix into latex particles to form an aqueous system. In a preferred embodiment, the emulsifier in the adhesive of the UD fabric of the present disclosure is 5-20%, for example, 10-20%, 11-16%, 12.3%, 13.3%, 14.5% by mass of the adhesive. In a preferred embodiment, a mass ratio of the resin matrix to the emulsifier in the adhesive of the UD fabric of the present disclosure is 1: (0.1-0.6), preferably 1: (0.2-0.3), more preferably 1: (0.25-0.3).

The UD fabric of the present disclosure is characterized in that the adhesive further comprises aramid nanofibers. In the adhesive of the UD fabric of the present disclosure, the aramid nanofiber is generally 5-50% by mass of the adhesive. It's discovered in present disclosure that, due to the compatibility provided by the similar chemical structures of the nanofiber and the fiber filament and the hydrogen bonding structure therebetween, the aramid nanofiber can not only act as an ideal nano-reinforcement material for the adhesive system, but also improve the interlayer adhesion at the interface in the UD fabric. Hence, it can be used as a reinforcing agent and an interface agent for the adhesive. In a preferred embodiment, the aramid nanofiber in the adhesive of the UD fabric of the present disclosure is 10-40%, preferably 10-36%, for example, 10-18%, 10- 25%, 10-32%, 31% by mass of the adhesive. Within the above mass fraction ranges, the UD fabric has a suitable areal density and excellent ballistic resistance (such as V50 value and protection level under the international ballistic resistance standard NIJ0101.06). In some embodiments, the aramid nanofiber is further preferably 18-36%, for example, 25-36%, 25-32%, 30-32% by mass of the adhesive. In a preferred embodiment, a mass ratio of the resin matrix to the aramid nanofiber in the adhesive of the UD fabric of the present disclosure is 1:(0.1-1), preferably 1:(0.15-0.9), for example, 1:(0.35-0.75), 1:(0.35-0.55).

In the present disclosure, the adhesive preferably further comprises a tackifier. The function of the tackifier is to improve the binding force, and improve the adhesion between the adhesive and the fiber. When present in the adhesive of the UD fabric of the present disclosure, the tackifier is generally 5-30% by mass of the adhesive. In a preferred embodiment, the tackifier in the adhesive of the UD fabric of the present disclosure is 5-20%, for example, 10-20%, 11-16%, 12.3%, 13.3%, 14.5% by mass of the adhesive. In a preferred embodiment, a mass ratio of the resin matrix to the tackifier in the adhesive of the UD fabric of the present disclosure is 1:(0.1-0.5), preferably 1:(0.15-0.4), more preferably 1:(0.1-0.3), more preferably 1:(0.25-0.3). The tackifier suitable for the present disclosure may be a tackifier commonly used in the art to improve the binding force of the adhesive, and may be selected from petroleum hydrocarbon resins (such as aliphatic hydrocarbon resins, for example, C5 resins, C9 resins) and natural resins (such as rosin, terpenes and derivatives thereof). In a preferred embodiment, the tackifier in the adhesive of the UD fabric of the present disclosure comprises a petroleum hydrocarbon resin and a natural resin, such as an aliphatic hydrocarbon resin and a natural rosin resin, for adjusting the viscosity and stability of the system. When the tackifier comprises a petroleum hydrocarbon resin and a natural resin, a mass ratio of the petroleum hydrocarbon resin to the natural resin may be from 2:1 to 1:2, for example, 3:5, 1: 1.

In the present disclosure, preferably or optionally, the adhesive further comprises one or more selected from a defoamer, an antioxidant and a pH regulator. In the present disclosure, the respective contents of the defoamer, antioxidant and pH regulator in the adhesive may be their conventional contents in the art. In the adhesive of the UD fabric of the present disclosure, when present, a total mass fraction of the defoamer, antioxidant and pH regulator is generally no more than 5%, preferably no more than 2.5%, for example, 1%- 2.5%, 1%-2% of the adhesive.

In some embodiments, the adhesive in the aramid nanofiber composite UD fabric of the present disclosure comprises a resin matrix, an emulsifier, a tackifier, aramid nanofibers and optionally one or more of selected from a defoamer, an antioxidant and a pH regulator, or consists of a resin matrix, an emulsifier, a tackifier, aramid nanofibers and optionally one or more of selected from a defoamer, an antioxidant and a pH regulator.

The method for preparing the aramid nanofiber composite UD fabric of the present disclosure comprises:
(1) preparing a unidirectional sheet layer comprising unidirectionally arranged aramid fibers and an adhesive, wherein the adhesive comprises aramid nanofibers;
   optionally further comprising:
(2) laminating unidirectional sheet layers, and then optionally attaching a protective layer to each of upper and lower surfaces of the laminated unidirectional sheet layers; and/or
(3) compounding the laminated unidirectional sheet layers by hot-pressing to obtain the UD fabric comprising a plurality of unidirectional sheet layers.

In step (1), the unidirectional sheet layer may be prepared using any method known in the art. For example, an aqueous dispersion of the adhesive may be uniformly adhered to aramid fibers and dried to obtain a unidirectional sheet layer. The present disclosure is characterized in that the adhesive comprises aramid nanofibers. That is, the aqueous dispersion of the adhesive is an aqueous dispersion of the adhesive comprising aramid nanofibers. In some embodiments, step (1) comprises: adhering an aqueous dispersion of the adhesive uniformly to the unidirectionally arranged aramid fibers, and drying the aramid fibers to which the aqueous dispersion of the adhesive is adhered to obtain the unidirectional sheet layer. In some embodiments, the aqueous dispersion of the adhesive is adhered to the unidirectionally arranged aramid fibers by impregnating the aramid fibers with the aqueous dispersion of the adhesive.

In the present disclosure, the aqueous dispersion of the adhesive is formed by dispersing the aforementioned components of the adhesive in water. That is, the aqueous dispersion of the adhesive comprises a resin matrix, an emulsifier, aramid nanofibers and water, and optionally or preferably further comprises one or more selected from a tackifier, a defoamer, an antioxidant and a pH regulator. It's discovered in the present disclosure that the aramid nanofiber is highly dispersive in the aqueous dispersion of the adhesive of the present disclosure. The proportions of the solid components in the aqueous dispersion of the adhesive are the same as the aforementioned proportions of the components in the adhesive. The solids content of the aqueous dispersion of the adhesive is generally 30%-70%, preferably 40%-60%, for example, 47.6%, 50%, 52.2%, 54.2%, 56%. Water suitable for the present disclosure is preferably deionized water. In the aqueous dispersion of the adhesive, the mass ratio of water to the solid components excluding the aramid nanofiber is generally from 7:3 to 4:6, preferably from 6.5:3.5 to 4.5:5.5, more preferably from 6:4 to 5 :5, for example 5.5:4.5. In the aqueous dispersion of the adhesive, the aramid nanofiber is generally 2%-20%, preferably 4%-20%, for example, 4.8%, 9.1%, 13%, 16.7%, 20%, more preferably 13%-20%, more preferably 15%-18% by mass of the aqueous dispersion of the adhesive. The aqueous dispersion of the adhesive adhered to the aramid fiber forms an adhesive film on the surface of the aramid fiber. In the present disclosure, the thickness of the adhesive film is preferably 0.01-0.1 mm, more preferably 0.01-0.05 mm, more preferably 0.02-0.04 mm. In the present disclosure, the method for controlling the amount of impregnation (adhesive film thickness) may be any method known in the art for controlling an amount of impregnation. In the case of adhering by impregnation, the temperature of the aqueous dispersion of the adhesive is generally controlled at a temperature ranging from room temperature to 90 °C. Drying may be performed using a circulating heater. When drying the aramid fiber to which the aqueous dispersion of the adhesive is adhered, the drying temperature and time should be such that the water in the aqueous dispersion of the adhesive adhered to the aramid fiber is evaporated to dryness.

The processes for preparing the UD fabric mainly include the drum winder and heat pressing process, and the combined rollers impregnation and lamination process. In the method for preparing the aramid nanofiber composite UD fabric of the present disclosure, the multi-roll continuous filament-laying hot-pressing process is preferably used.

In step (2), the protective layer is generally a polymer film. The thickness of the polymer film is generally 2-30 µm. Polymer films suitable for the present disclosure include polyethylene (PE) film, polyamide (PA) film, polyacrylate film and polycarbonate film. The number of the unidirectional sheet layers that are laminated is preferably 35-65. When lamination is performed, it is preferable to employ cross-lamination. That is, the aramid fibers in two adjacent unidirectional sheet layers are preferably arranged to form an included angle which is preferably 90°. In the present disclosure, the cross-lamination by which the aramid fibers in two adjacent unidirectional sheet layers are arranged to form an included angle of 90° is called 0°/90° cross-lamination. During lamination, the included angles between each two adjacent unidirectional sheet layers may be the same or different. In some embodiments, the included angles between each two adjacent unidirectional sheet layers are the same, for example, all being 60° or 90°.

In step (3), the hot pressing temperature is preferably 150-250 °C. The hot pressing pressure is preferably 10-30 MPa. As can be appreciated by those skilled in the art, the appropriate hot pressing time depends on the number of sheet layers that are compounded.

In a preferred embodiment, the method for preparing the aramid nanofiber composite UD fabric of the present disclosure comprises the following steps:
(1) laying aramid fibers on a master roll of an impregnation line; passing the aramid fibers using a draw roll through an adhesive bath containing an aqueous dispersion of an adhesive formulated in advance, wherein the adhesive comprises aramid nanofibers; uniformly laying the aramid fibers using a nip roller to have it coated with the adhesive to form an adhesive film having a thickness of preferably 0.01-0.1 mm, more preferably 0.01-0.05mm; and drying to obtain a unidirectional sheet layer;
(2) laminating the unidirectional sheet layers, and then preferably attaching a protective layer to each of the upper and lower surfaces of the laminated unidirectional sheet layers, wherein during lamination, the aramid fibers in two adjacent unidirectional sheet layers are preferably arranged to form a certain included angle which are preferably 90±10°;
(3) compounding the laminated unidirectional sheet layers by hot pressing to obtain a UD fabric comprising a plurality of unidirectional sheet layers, wherein the hot pressing temperature is preferably 150-250 °C, and the hot pressing pressure is preferably 10-30 MPa.

It's discovered in the present disclosure that a UD fabric having excellent ballistic resistance can be prepared with the use of an aqueous dispersion of an adhesive containing aramid nanofibers. Therefore, the present disclosure includes an aqueous dispersion of an adhesive comprising a resin matrix, an emulsifier, aramid nanofibers and water, and optionally or preferably further comprises one or more of a tackifier, a defoamer, an antioxidant, and a pH regulator. In a preferred embodiment, the present disclosure includes an aqueous dispersion of an adhesive comprising a resin matrix, a tackifier, an emulsifier, aramid nanofibers and water, and optionally or preferably further comprises one or more of a defoamer, an antioxidant, and a pH regulator. In the aqueous dispersion of the adhesive of the present disclosure, the mass ratio of water to the solid components excluding the aramid nanofiber is generally from 7:3 to 4:6, preferably from 6.5:3.5 to 4.5:5.5, more preferably from 6:4 to 5:5, for example 5.5:4.5. The proportions of the solid components in the aqueous dispersion of the adhesive of the present disclosure are the same as the aforementioned proportions of the components in the adhesive. The solids content of the aqueous dispersion of the adhesive of the present disclosure is generally 30%-70%, preferably 40%-60%, for example, 47.6%, 50%, 52.2%, 54.2%, 56%. In the aqueous dispersion of the adhesive of the present disclosure, the aramid nanofiber is generally 2%-20%, preferably 4%-20%, for example, 4.8%, 9.1%, 13%, 16.7%, 20%, more preferably 13%-20%, more preferably 15%-18% by mass of the aqueous dispersion of the adhesive. The present disclosure further includes the use of the aqueous dispersion of the adhesive of the present disclosure for preparing a UD fabric or improving the ballistic resistance of a UD fabric. In the present disclosure, the improvement of the ballistic resistance refers to the increase of the V50 value and/or the protection level under the ballistic resistance standard NIJ0101.06.

The present disclosure further includes a bulletproof sheet material and a bulletproof article prepared from the UD fabric of the present disclosure. The bulletproof sheet material may be, for example, a UD fabric comprising a plurality of unidirectional sheet layers, which may be obtained by laminating monolayer UD fabrics, or by further laminating multilayer UD fabrics. The bulletproof sheet material may be used for bulletproof vests, bulletproof inserts and bulletproof helmets. The bulletproof articles include bulletproof vests, bulletproof inserts and bulletproof helmets. Bulletproof inserts include personal bulletproof inserts and vehicle bulletproof inserts. The UD fabric of the present disclosure may be made into bulletproof articles using any method known in the art. For example, the UD fabric of the present disclosure may be cut, laminated, compounded and shaped to prepare a bulletproof article.

The technical solution of the present disclosure has the following advantages:

The method for preparing the aramid nanofiber composite UD fabric of the present disclosure is safe and environmentally friendly. The aqueous adhesive system used is harmless to the human body or environment. The aramid nanofiber has a high specific surface area and can be stably dispersed in the aqueous adhesive system. It can be uniformly dispersed in the two-phase interface of the aramid fiber and adhesive by the hot pressing process. The high strength and stiffness of the aramid nanofiber, and the hydrogen bonding effect between the aramid nanofiber and the aramid filament, can be utilized to not only reinforce the adhesive, but also improve the performance of the two-phase interface. Compared with the UD fabric prepared by using an ultra-high-strength aramid fiber of 28 g/d or higher, the UD fabric of the present disclosure not only has comparable ballistic resistance, but also has lower cost and production difficulty. It has better economy. When the UD fabric of the present disclosure is used for a bulletproof article, the ballistic impact resistance can be improved effectively. The article has higher safety without increasing the weight of the article significantly. The article is softer and more comfortable.

The present disclosure will be fully illustrated with reference to the following examples. However, these examples are only for illustration of the present disclosure, and are not intended to limit the scope of the present disclosure. The protection scope of the present disclosure is limited only by the claims, and any omission, replacement or modification made by those skilled in the art on the basis of the disclosed embodiments of the present disclosure will fall in the protection scope of the present disclosure.

In the following examples, conventional instruments and equipments in the art are used. The experimental methods in the following examples for which no specific conditions are indicated will be carried out generally under conventional conditions or under those conditions suggested by the manufacturers. Unless otherwise specified, the various materials and reagents used in the following examples are conventional products that are commercially available, and their specifications are those commonly used in the art. In the specification of the present disclosure and the following examples, unless otherwise specified, "%" means percent by weight, "parts" means parts by weight, and ratios are based on weight.

The following raw materials were used in the examples:
Para-aramid fiber: available from Sinochem High Performance Fiber Materials Co., Ltd., brand: ZHAODA HT840D-01, tensile strength: 26g/d, initial modulus: 100GPa, elongation at break: 3.5%, fineness: 840D;
Para-aramid nanofiber: self-made by chemical pyrolysis: the ZHAODA HT840D-01 para-aramid fiber was dissolved in highly polar DMSO, then KOH was added, and high-speed shearing was performed, so as to obtain the nanofiber; diameter of the nanofiber: 20-50 nm, length: 10-30 µm;
Resin matrix: styrene-isoprene-styrene block copolymer D1161 SIS, purchased from Kraton Co., U.S.;
Tackifier 1: aliphatic hydrocarbon resin Piccotac 95E, purchased from Eastman Co., U.S.;
Tackifier 2: natural rosin resin Foralyn E, Eastman Co., U.S.;
Emulsifier: non-ionic emulsifier B4, purchased from Shanghai Lianji Chemical Co.;
Defoamer: water treatment defoamer DF101, purchased from Dongguan Defeng Chemical Co., Ltd.;
Antioxidant: aqueous antioxidant 1003, purchased from Nantong Xinchang Chemical Co., Ltd.;
pH regulator: aqueous ammonia, purchased from Aladdin;
Ultra-high molecular weight polyethylene nanofiber: made by chemical pyrolysis of ultra-high molecular weight polyethylene fiber having a tensile strength of 3.5 GPa, an initial modulus of 120 GPa, and an elongation at break of 3.5%; diameter of the nanofiber: 20-50 nm, length: 10-30 µm.

### Examples 1-5

The aramid nanofiber composite UD fabric of the present disclosure was prepared in Examples 1-5 by a process comprising the following steps:

### (1) Filament laying and impregnation

The aramid fibers on a creel were laid on the master roll of an impregnation line using a tension controller and a drawing device, followed by passing the aramid fibers using a draw roll through an adhesive bath containing an aqueous dispersion of an adhesive formulated in advance. Then, the aramid fibers were laid uniformly using a nip roller and coated with the adhesive. The water in the aqueous dispersion of the adhesive was evaporated to dryness by a circulating heater, and then a unidirectional sheet layer was formed and coiled. The thickness of the adhesive film was 0.02 mm.

The aqueous dispersion of the adhesive included a resin matrix, a resin modifier, a tackifier, an emulsifier, a defoamer, an antioxidant, a pH regulator, deionized water and aramid nanofibers. Aqueous dispersions of the adhesive with different aramid nanofiber contents were used in Examples 1-5. The specific formulas of the aqueous dispersions of the adhesive are shown in Table 1.

The mass fraction of the aramid nanofiber in the adhesive = the mass of the aramid nanofiber ÷ the total mass of the components excluding water in the aqueous dispersion of the adhesive (i.e. the mass of the solid components in the aqueous dispersion of the adhesive). Therefore, the mass fractions of the aramid nanofiber in the adhesive in Examples 1-5 are 10%, 18.2%, 25%, 30.8% and 35.7%, respectively.

The mass fraction of the aramid nanofiber in the aqueous dispersion of the adhesive = the mass of the aramid nanofiber ÷ the mass of the aqueous dispersion of the adhesive. Therefore, for the aqueous dispersions of the adhesive in Examples 1-5, the mass fractions of the aramid nanofiber in the aqueous dispersion of the adhesive are 4.8%, 9.1%, 13%, 16.7% and 20%, respectively.

**Table 1: Formulas of aqueous dispersions of the adhesive used in Examples 1-5 unit: parts by weight)**

| Component | Ex. 1 | Ex. 2 | Ex. 3 | Ex. 4 | Ex. 5 |
|---|---|---|---|---|---|
| Resin matrix | 28 | 28 | 28 | 28 | 28 |
| Tackifier 1 | 3 | 3 | 3 | 3 | 3 |
| Tackifier 2 | 5 | 5 | 5 | 5 | 5 |
| Emulsifier | 8 | 8 | 8 | 8 | 8 |
| Defoamer | 0.3 | 0.3 | 0.3 | 0.3 | 0.3 |
| Antioxidant | 0.2 | 0.2 | 0.2 | 0.2 | 0.2 |
| pH regulator | 0.5 | 0.5 | 0.5 | 0.5 | 0.5 |
| Deionized water | 55 | 55 | 55 | 55 | 55 |
| Aramid nanofiber | 5 | 10 | 15 | 20 | 25 |

### (2) Cross-lamination

The coiled unidirectional sheet layer was cut according to the cutting requirements and turned 90°, followed by 0°/90° cross-lamination. That is, adjacent unidirectional sheet layers were arranged in the directions shown by the left drawing in Fig. 1 (the aramid fibers were arranged in a 0° direction) and the right drawing (the aramid fibers were arranged in a 90° direction) respectively and laminated. Finally, a linear low-density polyethylene (LLDPE) film was attached to each of the top and bottom of the resulting laminate. The thickness of the LLDPE film was 5 µm. The number of the unidirectional sheet layers in the 0°/90° cross-laminate was 55.

### (3) Hot pressing compounding

The cross-laminated unidirectional sheet layers were compounded by hot-pressing, and then cooled to obtain a multilayer aramid UD fabric bulletproof material, wherein the hot pressing temperature was 180 °C; the pressure was 15 MPa; and the time was 20 minutes.

Based on the total length of the aramid fiber used for the UD fabric and the linear density of the aramid fiber, the mass of the aramid fiber can be calculated. After measuring the total mass of the UD fabric, the mass fraction of the aramid fiber in the UD fabric can be calculated. For the multilayer aramid UD fabric bulletproof materials prepared in Examples 1-5, the mass fractions of the aramid fiber in the aramid UD fabric are all 80%, and the mass fractions of the adhesive in the aramid UD fabric are all 20%.

### Test Example 1

The multilayer aramid UD fabric prepared in Examples 1-5 was cut to make a 400mm*400mm square target piece. According to the international ballistic resistance standard NIJ0101.06, a 9 mm all-metal round-nose bullet was used for the target shooting test. The ballistic resistance test results are shown in Table 2 below, where V50 refers to the velocity of the bullet at which the penetration probability is 50%, and a larger V50 value indicates better ballistic resistance. In addition, two-layer 0°/90° cross-laminated aramid UD fabrics were prepared according to the method for Examples 1-5, and the areal density of each of the two-layer aramid UD fabrics was tested. The results are shown in Table 2.

**Table 2: Target shooting results of the aramid UD target pieces made of the multilayer aramid UD fabrics of Examples 1-5 and the areal densities of the two-layer aramid UD fabrics**

| | Amount of aramid nanofiber (parts by mass) | Areal density (g/cm²) | V50 (m/s) | Protection level |
|---|---|---|---|---|
| Ex. 1 | 5 | 232 | 497 | IIIA |
| Ex. 2 | 10 | 235 | 513 | IIIA |
| Ex. 3 | 15 | 241 | 523 | IIIA |
| Ex. 4 | 20 | 239 | 529 | IIIA |
| Ex. 5 | 25 | 242 | 525 | IIIA |

The test results show that the bulletproof target pieces made of the aramid nanofiber composite UD fabric of the present disclosure exhibit good ballistic resistance. The addition of a certain amount of aramid nanofiber to the adhesive can effectively increase the V50 value, and the bulletproof target pieces can all reach the highest protection level, i.e. Level IIIA.

An analysis of the ballistic resistance test results shows that relatively speaking, the aramid UD fabrics including 15 parts by mass (Example 3), 20 parts by mass (Example 4) and 25 parts by mass (Example 5) of the aramid nanofiber in the adhesive have higher V50 values.

### Comparative Examples 1-2

Comparative Example 1 with no addition of nanofiber and Comparative Example 2 with addition of another type of nanofiber were used to illustrate the effect of the aramid nanofiber used according to the present disclosure in improving the ballistic resistance of a UD fabric.

The multilayer aramid UD fabric bulletproof materials of Comparative Examples 1 and 2 were prepared according to the method for Examples 1-5 except that the aqueous dispersions of the adhesive shown in Table 3 were used. In the adhesive for Comparative Example 2, the mass fraction of the ultra-high molecular weight polyethylene nanofiber in the adhesive was 25%. In the aqueous adhesive dispersion for Comparative Example 2, the mass fraction of the ultra-high molecular weight polyethylene nanofiber in the aqueous dispersion of the adhesive was 13%.

**Table 3: Formulas of aqueous dispersions of the adhesive used in Comparative Examples 1 and 2 (unit: parts by weight)**

| Component | Comparative Example 1 | Comparative Example 2 |
|---|---|---|
| Resin matrix | 28 | 28 |
| Tackifier 1 | 3 | 3 |
| Tackifier 2 | 5 | 5 |
| Emulsifier | 8 | 8 |
| Defoamer | 0.3 | 0.3 |
| Antioxidant | 0.2 | 0.2 |
| pH regulator | 0.5 | 0.5 |
| Deionized water | 55 | 55 |
| Ultra-high molecular weight polyethylene nanofiber | Absent | 15 |

### Test Example 2

The multilayer aramid UD fabric prepared in Comparative Examples 1-2 was cut to make a 400mm*400mm square target piece. According to the international ballistic resistance standard NIJ0101.06, a 9 mm all-metal round-nose bullet was used for the target shooting test. The ballistic resistance test results are shown in Table 4 below. In addition, two-layer 0°/90° cross-laminated aramid UD fabrics were prepared according to the method for Comparative Examples 1-2, and the areal density of each of the two-layer aramid UD fabrics was tested. The results are shown in Table 4.

**Table 4: Target shooting results of the aramid UD target pieces made of the multilayer aramid UD fabrics of Comparative Examples 1-2 and the areal densities of the two-layer aramid UD fabrics**

| | Nanofiber | Areal density (g/cm²) | V50 (m/s) | Protection level |
|---|---|---|---|---|
| Comparative Example 1 | Absent | 218 | 485 | IIIA |
| Comparative Example 2 | 15 parts by weight of ultra-high molecular weight polyethylene nanofiber | 229 | 445 | II |

The ballistic resistance test results show that for the aramid UD fabric with no addition of aramid nanofiber (Comparative Example 1), the V50 value is 485 m/s, lower than that of the aramid UD fabric containing aramid nanofiber. The ballistic resistance of the aramid UD fabric with addition of 15 parts by weight of ultra-high molecular weight polyethylene nanofiber to the adhesive (Comparative Example 2) drops significantly. Ultra-high molecular weight polyethylene nanofiber has difficulty in modifying the interface, and in turn, affects the stability of the adhesive system, thereby reducing the protection level.

Based on the analysis of the above results, the addition of aramid nanofiber has an important effect in improving the V50 of aramid bulletproof articles. With the proviso that the protection level IIIA is satisfied, the addition of an appropriate amount of aramid nanofiber to the adhesive enables production of bulletproof articles having higher V50 protection levels.

The present disclosure has been described in detail with reference to the methods and specific embodiments described above, and variations and modifications based on the present disclosure all fall in the protection scope of the present disclosure.

## Claims

1. An aramid nanofiber composite unidirectional fabric, wherein the aramid nanofiber composite unidirectional fabric comprises a unidirectional sheet layer, wherein the unidirectional sheet layer comprises unidirectionally arranged aramid fibers and an adhesive, wherein the adhesive comprises aramid nanofibers.

2. The aramid nanofiber composite unidirectional fabric of claim 1, wherein the aramid nanofiber composite unidirectional fabric comprises one or more of the following features:
the aramid fiber is 75-85% by mass of the aramid nanofiber composite unidirectional fabric;
the adhesive is 15-25% by mass of the aramid nanofiber composite unidirectional fabric;
the aramid nanofiber is 5-50%, preferably 18-36% by mass of the adhesive.

3. The aramid nanofiber composite unidirectional fabric of claim 1, wherein the aramid nanofiber composite unidirectional fabric comprises one or more of the following features:
the aramid nanofiber has a diameter of 5-200 nm, preferably 10-100 nm, more preferably 20-50 nm;
the aramid nanofiber has a length of 5-100 µm, preferably 5-50 µm, more preferably 10-30 µm;
the aramid fiber has a fineness of 500-2000 D, preferably 800-1000 D;
the aramid fiber has a tensile strength of greater than or equal to 23 g/d, an initial modulus of greater than or equal to 90 GPa, and an elongation at break of greater than or equal to 3%;
the aramid fiber is para-aramid fiber and/or heterocyclic aramid fiber;
the aramid nanofiber is para-aramid nanofiber and/or heterocyclic aramid nanofiber.

4. The aramid nanofiber composite unidirectional fabric of claim 1, wherein the aramid nanofiber composite unidirectional fabric comprises at least two unidirectional sheet layers, wherein the aramid fibers in two adjacent unidirectional sheet layers are preferably arranged to form an included angle of 90±10°, wherein the aramid nanofiber composite unidirectional fabric preferably comprises 35-65 unidirectional sheet layers.

5. The aramid nanofiber composite unidirectional fabric of claim 1, wherein the adhesive comprises a resin matrix, an emulsifier, aramid nanofibers, and optionally one or more selected from a tackifier, a defoamer, an antioxidant, and a pH regulator.

6. The aramid nanofiber composite unidirectional fabric of claim 5, wherein the aramid nanofiber composite unidirectional fabric comprises one or more of the following features:
the resin matrix is a styrene block copolymer, a polyurethane, a polyacrylate or a combination thereof, preferably a styrene block copolymer, more preferably a styrene-isoprene-styrene block copolymer;
the resin matrix in the adhesive is 20-70%, preferably 30-70%, more preferably 40-60% by mass of the adhesive;
the emulsifier is one or more selected from alcohol ether emulsifiers, phenol ether emulsifiers, ester ether emulsifiers, fatty acid ester emulsifiers and polyethylene glycol fatty acid ester emulsifiers;
a mass ratio of the resin matrix to the emulsifier in the adhesive is 1:(0.1-0.6), preferably 1:(0.2-0.3), more preferably 1: (0.25-0.3);
the aramid nanofiber in the adhesive is 10-40%, preferably 10-36%, more preferably 18-36% by mass of the adhesive;
the tackifier is selected from petroleum hydrocarbon resins and natural resins, wherein the tackifier preferably comprises a petroleum hydrocarbon resin and a natural resin, wherein a mass ratio of the petroleum hydrocarbon resin to the natural resin in the tackifier is preferably from 2:1 to 1:2;
the tackifier, when present in the adhesive, is 5-20% by mass of the adhesive;
a total mass fraction of the defoamer, antioxidant and pH regulator, when present in the adhesive, is no more than 5% of the adhesive.

7. The aramid nanofiber composite unidirectional fabric of claim 5, wherein the aramid nanofiber composite unidirectional fabric further comprises a protective layer, wherein the protective layer is a polymer film; wherein the polymer film preferably has a thickness of 2-30 µm; wherein the polymer film is preferably selected from polyethylene film, polyamide film, polyacrylate film and polycarbonate film.

8. A method for preparing an aramid nanofiber composite unidirectional fabric, comprising:
(1) preparing a unidirectional sheet layer comprising unidirectionally arranged aramid fibers and an adhesive, wherein the adhesive comprises aramid nanofibers;
optionally further comprising:
(2) laminating unidirectional sheet layers, and then optionally attaching a protective layer to each of upper and lower surfaces of the laminated unidirectional sheet layers;
(3) compounding the laminated unidirectional sheet layers by hot-pressing to obtain a unidirectional fabric comprising multiple unidirectional sheet layers.

9. The method of claim 8, wherein the method comprises one or more of the following features:
in step (1), an aqueous dispersion of the adhesive is adhered to the unidirectionally arranged aramid fibers and dried to obtain the unidirectional sheet layer, wherein the aqueous dispersion of the adhesive comprises aramid nanofibers; wherein the aramid nanofiber in the aqueous dispersion of the adhesive is preferably 4.8%-20% by mass of the aqueous dispersion of the adhesive; wherein a mass ratio of water to solid components excluding the aramid nanofiber in the aqueous dispersion of the adhesive is preferably from 7:3 to 4:6, preferably from 6:4 to 5:5; the thickness of the aqueous dispersion of the adhesive adhered to the unidirectionally arranged aramid fibers is preferably 0.01-0.1 mm;
in step (2), 35-65 layers are laminated;
in step (2), during lamination, the aramid fibers in two adjacent unidirectional sheet layers are arranged to form an included angle of 90±10°;
in step (3), a hot pressing temperature is 150-250° C, and a hot pressing pressure is 10-30 MPa.

10. An aramid nanofiber composite unidirectional fabric prepared by the method of claim 8 or 9, wherein
the aramid nanofiber composite unidirectional fabric is preferably the aramid nanofiber composite unidirectional fabric of any one of claims 1-7.

11. An aqueous dispersion of an adhesive, wherein the aqueous dispersion of the adhesive comprises a resin matrix, an emulsifier, aramid nanofibers, water, and optionally one or more selected from a tackifier, a defoamer, an antioxidant and a pH regulator;
wherein the aqueous dispersion of the adhesive preferably comprises one or more of the following features:
the aramid nanofiber in the aqueous dispersion of adhesive is 4.8%-20% by mass of the aqueous dispersion of the adhesive;
a mass ratio of water to solid components excluding the aramid nanofiber in the aqueous dispersion of the adhesive is from 7:3 to 4:6, preferably from 6:4 to 5: 5;
the resin matrix is a styrene block copolymer, a polyurethane, a polyacrylate or a combination thereof, preferably a styrene block copolymer, more preferably a styrene-isoprene-styrene block copolymer;
the resin matrix in the aqueous dispersion of the adhesive is 20-70%, preferably 30-70%, more preferably 40-60% by mass of solid components in the aqueous dispersion of the adhesive;
the emulsifier is one or more selected from alcohol ether emulsifiers, phenol ether emulsifiers, ester ether emulsifiers, fatty acid ester emulsifiers and polyethylene glycol fatty acid ester emulsifiers;
a mass ratio of the resin matrix to the emulsifier in the aqueous dispersion of the adhesive is 1:(0.1-0.6), preferably 1:(0.2-0.3), more preferably 1:(0.25-0.3);
the aramid nanofiber is para-aramid nanofiber and/or heterocyclic aramid nanofiber;
the aramid nanofiber has a diameter of 5-200 nm, preferably 10-100 nm, more preferably 20-50 nm;
the aramid nanofiber has a length of 5-100 µm, preferably 5-50 µm, more preferably 10-30 µm;
the aramid nanofiber in the aqueous dispersion of the adhesive is 5-50%, preferably 10-40%, more preferably 10-36%, more preferably 18-36% by mass of solid components in the aqueous dispersion of the adhesive;
the tackifier is selected from petroleum hydrocarbon resins and natural resins, wherein the tackifier preferably comprises a petroleum hydrocarbon resin and a natural resin, wherein a mass ratio of the petroleum hydrocarbon resin to the natural resin is preferably from 2:1 to 1:2;
the tackifier, when present in the aqueous dispersion of the adhesive, is 5-20% by mass of solid components in the aqueous dispersion of the adhesive;
a total mass fraction of the defoamer, antioxidant and pH regulator, when present in the aqueous dispersion of the adhesive, is no more than 5% of solid components in the aqueous dispersion of the adhesive.

12. Use of the aqueous dispersion of the adhesive of claim 11 for preparing a unidirectional fabric or improving ballistic resistance of a unidirectional fabric.

13. A bulletproof article, wherein the bulletproof article comprises the aramid nanofiber composite unidirectional fabric of any one of claims 1-7 and 10; wherein the bulletproof article preferably includes a bulletproof vest, a bulletproof insert and a bulletproof helmet.
